# EUROPÄISCHE PATENTSCHRIFT

(11) **EP 1 346 427 B1**
(45) Veröffentlichungstag und Bekanntmachung des Hinweises auf die Patenterteilung: **15.09.2004**
(21) Anmeldenummer: 01999015.9
(22) Anmeldetag: 21.11.2001
(51) Int. Cl.: H01M 8/02, H01M 8/24

(54) **BRENNSTOFFZELLENMODUL MIT MAGNETISCHER ABSCHIRMUNG**
FUEL CELL MODULE COMPRISING A MAGNETIC SHIELDING
MODULE DE PILES A COMBUSTIBLE A PROTECTION MAGNETIQUE

(30) Priorität: 30.11.2000 DE 10059568
(43) Veröffentlichungstag der Anmeldung: 24.09.2003
(73) Patentinhaber: SIEMENS AKTIENGESELLSCHAFT, 80333 München (DE)
(72) Erfinder: MATTEJAT, Arno, 91088 Bubenreuth (DE); LERSCH, Josef, 91336 Heroldsbach (DE); STRASSER, Karl, 91058 Erlangen (DE)
(86) Internationale Anmeldenummer: PCT/DE2001/004392
(87) Internationale Veröffentlichungsnummer: WO 2002/045193

(56) Entgegenhaltungen:
- EP-A- 1 001 666
- EP-A- 1 046 723
- US-A- 5 235 243
- PATENT ABSTRACTS OF JAPAN vol. 018, no. 668 (C-1289), 16. Dezember 1994 (1994-12-16) & JP 06 264193 A (SUMITOMO METAL IND LTD), 20. September 1994 (1994-09-20)

## Beschreibung

Die Erfindung betrifft ein Brennstoffzellenmodul mit einer Anzahl von in einem Gehäuse angeordneten, elektrisch in Reihe geschalteten Brennstoffzellen.

Brennstoffzellen können zur umweltfreundlichen Erzeugung von Elektrizität dienen. In einer Brennstoffzelle läuft ein Prozeß ab, der im wesentlichen eine Umkehrung der Elektrolyse darstellt. In einer Brennstoffzelle wird dafür ein Wasserstoff aufweisender Brennstoff einer Anode und ein Sauerstoff aufweisender Hilfsstoff einer Kathode zugeleitet. Anode und Kathode sind dabei elektrisch über eine Elektrolytschicht voneinander getrennt, wobei die Elektrolytschicht zwar einen Ionenaustausch zwischen dem Brennstoff und dem Sauerstoff zuläßt, ansonsten aber eine gasdichte Trennung von Brennstoff und Hilfsstoff sicherstellt. Infolge des Ionenaustauschs kann im Brennstoff enthaltener Wasserstoff mit dem Sauerstoff zu Wasser reagieren, wobei sich an der brennstoffseitigen Elektrode oder Anode Elektronen anreichern und an der hilfsstoffseitigen Elektrode oder Kathode Elektronen aufgenommen werden. Somit baut sich beim Betrieb der Brennstoffzelle eine nutzbare Potentialdifferenz oder Spannung zwischen Anode und Kathode auf, wobei als Abfallprodukt aus dem Elektrizitätserzeugungsprozeß lediglich Wasser anfällt. Die Elektrolytschicht, die bei einer Hochtemperatur-Brennstoffzelle als keramischer Festelektrolyt oder bei einer Niedertemperatur-Brennstoffzelle als Polymer-Membran ausgebildet sein kann, hat somit die Funktion, die Reaktanten voneinander zu trennen, die Ladung in Form von Ionen zu überführen und einen Elektronenkurzschluß zu verhindern.

Eine Brennstoffzelle umfaßt einen flachen Elektrolyten, an dessen eine flache Seite eine flache Anode und an dessen andere flache Seite eine ebenfalls flache Kathode grenzt. Diese beiden Elektroden bilden zusammen mit dem Elektrolyten eine sogenannte Elektrolyt-Elektroden-Einheit. Angrenzend an die Anode ist ein Anodengasraum und angrenzend an die Kathode ein Kathodengasraum angeordnet. Zwischen dem Anodengasraum einer Brennstoffzelle und dem Kathodengasraum einer dieser Brennstoffzelle benachbarten Brennstoffzelle ist eine Verbundleiterplatte angeordnet. Die Verbundleiterplatte stellt eine elektrische Verbindung zwischen der Anode der erstgenannten Brennstoffzelle und der Kathode der zweitgenannten Brennstoffzelle her. In Abhängigkeit von der Art der Brennstoffzelle ist die Verbundleiterplatte beispielsweise als eine einzelne metallische Platte oder als ein Kühlelement ausgestaltet, das zwei aufeinander gestapelte Platten mit einem dazwischenliegenden Kühlwasserraum umfaßt. Je nach Ausführungsform der Brennstoffzellen befinden sich in einem Brennstoffzellenstapel weitere Bauelemente, wie beispielsweise elektrisch leitende Schichten, Dichtungen oder Druckkissen.

Aufgrund der elektrochemischen Potentiale der üblicherweise eingesetzten Stoffe kann in einer derartigen Brennstoffzelle unter normalen Betriebsbedingungen eine Elektrodenspannung von etwa 0,6 bis 1,0 V aufgebaut und während des Betriebs aufrechterhalten werden. Für technische Anwendungen, in denen abhängig vom Einsatzzweck oder der geplanten Belastung eine wesentlich höhere Gesamtspannung gefordert sein kann, sind daher üblicherweise eine Mehrzahl von Brennstoffzellen in der Art eines Brennstoffzellenstapels derart elektrisch in Reihe geschaltet, daß die Summe der von den Brennstoffzellen jeweils gelieferten Elektrodenspannungen der geforderten Gesamtspannung entspricht oder diese übersteigt. Je nach geforderter Gesamtspannung kann die Anzahl der Brennstoffzellen in einem derartigen Brennstoffzellenstapel beispielsweise 50 oder mehr betragen.

Zur Nutzbarmachung der beim Betrieb der zu einem derartigen Brennstoffzellenstapel zusammengeschalteten Brennstoffzellen erzeugten Potentialdifferenz ist die Beschaltung des Brennstoffzellenstapels mit einer Last vorgesehen. Zum elektrischen Anschluß der Last an den Brennstoffzellenstapel ist dabei an den beiden äußersten der in Serie geschalteten Brennstoffzellen jeweils eine sogenannte Polplatte angeordnet, an die elektrische Zu- oder Ableitungen anschließbar sind.

Aufgrund der besonderen Betriebseigenschaften derartiger Brennstoffzellen und insbesondere im Hinblick auf die Erzeugung von lediglich Wasser als einzigem wesentlichem Abfallprodukt eignen sich Brennstoffzellen auch besonders zum Einsatz zur Energieversorgung in in sich abgeschlossenen mobilen Systemen, wie beispielsweise Unterwasserfahrzeugen. Dabei ist insbesondere von Vorteil, daß in der Art einer vergleichsweise hohen Leistungsdichte in einer Brennstoffzellenanordnung mit nur beschränkten räumlichen Abmessungen ein vergleichsweise hoher Ausgangsstrom auf einem üblichen Spannungsniveau erzielbar ist. Zudem ist gerade bei der Verwendung in Unterwasserfahrzeugen der Brennstoff, also der den Wasserstoff umfassende Stoff, in vergleichsweise kompakter Form bereitstellbar. Als Hilfsstoff oder Oxidationsmittel kann dabei reiner Sauerstoff zum Einsatz kommen. Der Wasserstoff kann dabei insbesondere in Hydridtanks mitgeführt sein.

Gerade beim Einsatz von Brennstoffzellen in einem Unterwasserfahrzeug kann es wünschenswert sein, die nach außen abgegebene Signatur, also die von außen ermittelbaren Anzeichen auf den Aufenthaltsort oder Betrieb des Unterwasserfahrzeugs, besonders gering zu halten. Zu dieser Signatur können auch Magnetfelder zählen, die beim Betrieb von Brennstoffzellen durch die zu- und abfließenden Ströme erzeugt werden.

Der Erfindung liegt daher die Aufgabe zugrunde, ein Brennstoffzellenmodul mit einer Anzahl von in einem Gehäuse angeordneten, elektrisch in Reihe geschalteten Brennstoffzellen anzugeben, bei dem das in seinem Außenbereich nachweisbare Magnetfeld oder Streufeld besonders gering gehalten ist.

Diese Aufgabe wird erfindungsgemäß gelöst, indem sowohl das Gehäuse als auch die Polplatten und die Verbundleiterplatten aus Werkstoffen gefertigt sind, die eine relative magnetische Permeabilität (µᵣ) von weniger als 1,1 aufweisen.

Die relative Permeabilität µᵣ ist dabei eine materialabhängige Proportionalitätskonstante zwischen der magnetischen Feldstärke H und der magnetischen Induktion oder Flußdichte B. Die relative magnetische Permeabilität µᵣ gibt dabei insbesondere an, wie der jeweilige Werkstoff aufgrund seiner strukturellen oder molekularen Eigenschaften in Reaktion auf eine vorgegebene äußere magnetische Flußdichte B zur insgesamt entstehenden magnetischen Feldstärke H beiträgt.

Die Erfindung geht von der Überlegung aus, daß das im Außenbereich des Brennstoffzellenmoduls nachweisbare Magnetfeld sowohl aus aktiven als auch aus passiven Beiträgen zusammengesetzt sein kann. Um das im Außenbereich des Brennstoffzellenmoduls nachweisbare Magnetfeld besonders gering zu halten, sollten somit beide derartigen Beiträge unabhängig voneinander besonders gering gehalten werden. Im Hinblick auf die aktiven, beispielsweise durch den Betriebsstrom beim Betrieb des Brennstoffzellenmoduls induzierten Beiträge kann dies in Auslegungsvorgaben hinsichtlich der Stromführung beim Betrieb des Brennstoffzellenmoduls resultieren. Zusätzlich sollte aber auch der passive Beitrag, also die in Reaktion auf ein von außen vorgegebenes oder auch in Reaktion auf das durch den fließenden Betriebsstrom erzeugte Magnetfeld zusätzlich entstehende Komponente besonders gering gehalten werden. Ein Maß für einen derartigen Beitrag ist in der relativen magnetischen Permeabilität µᵣ zu sehen. Die Werkstoffe des Brennstoffzellenmoduls sind daher derart gewählt, daß ihre relative magnetische Permeabilität µᵣ und somit der in Reaktion auf ein vorgegebenes Magnetfeld auftretende Beitrag besonders gering gehalten ist.

Vorteilhafte Werkstoffe sind beispielsweise nichtmetallische Werkstoffe oder austenitische Stähle. Sie weisen die erforderliche niedrige Permeabilität auf und sind besonders stabil gegen chemische Angriffe.

Zweckmäßigerweise weisen sowohl die zur Bereitstellung der Brennstoffzellen an sich als auch die für die Herstellung von die Brennstoffzellen verbindenden Verbindungskomponenten oder ihnen zugeordneten Hilfskomponenten als auch die für das Gehäuse verwendeten Werkstoffe eine relative magnetische Permeabilität von weniger als 1,1 auf. Hierdurch werden höhermagnetische Materialien und somit eine erhöhte Signatur ganz vermieden.

Jede Brennstoffzelle umfaßt üblicherweise eine Anzahl von auch als Kühlkarten bezeichneten Trägerkarten, die jeweils Gas- und/oder Kühlmittelräume einschließen und mit einer Kontaktplatte versehen sind. Diese für die eigentliche Brennstoffzelle wesentlichen Funktionskomponenten sind vorteilhafterweise aus einem mit Graphit dotierten, mit einer Schutzschicht auf Ti-Basis versehenen Kunststoffkörper gebildet. Dabei ist einerseits durch die Wahl des kunststoffgebundenen Graphits als Hauptwerkstoff für die genannten Komponenten sichergestellt, daß diese eine besonders geringe relative magnetische Permeabilität µᵣ aufweisen und somit im wesentlichen vollständig unmagnetisch sind. Andererseits stellt die auf Ti-Basis gebildete Schutzschicht sicher, daß die jeweilige Funktionskomponente auch in einer vergleichsweise aggressiven Atmosphäre oder Umgebung ohne nennenswerte Beeinträchtigung betreibbar ist. Diese Komponenten sind nämlich beim Betrieb der Brennstoffzelle üblicherweise einer vergleichsweise aggressiven Atmosphäre, beispielsweise einer reinen Sauerstoffatmosphäre, ausgesetzt, so daß mit erhöhter Korrosion zu rechnen ist.

Um die genannten Komponenten gegenüber derartiger Korrosion auch bei der Wahl von kunststoffgebundenem Graphit als Hauptwerkstoff beständig zu machen, sind sie vorteilhafterweise in der Art einer Passivierung mit einer Schutzschicht auf Ti-Basis versehen.

In alternativer oder zusätzlicher vorteilhafter Ausgestaltung sind diejenigen Komponenten des Brennstoffzellenmoduls, die im Betriebsfall einem Kontakt mit einem Reaktanten der oder jeder Brennstoffzelle ausgesetzt sind, zumindest in einem Oberflächenbereich aus einer Legierung auf Nickel-Basis gefertigt. Durch eine derartige Werkstoffwahl ist nämlich einerseits gewährleistet, daß die relative magnetische Permeabilität µᵣ besonders gering gehalten sein kann.

Andererseits ist ein derartiger Werkstoff vergleichsweise unempfindlich gegenüber Korrosion und somit auch in Kontakt mit der vergleichsweise aggressiven Atmosphäre der Reaktanten mit besonders langer Betriebsdauer zuverlässig betreibbar. Dementsprechend können insbesondere die unmittelbar dem elektrochemischen Prozeß in einer jeweiligen Brennstoffzelle ausgesetzten Komponenten, wie beispielsweise Polplatten, Stromschienen und/oder Verbundleiterplatten wie Kühlkarten, aus einer derartigen Legierung auf Nickel-Basis gefertigt sein.

In weiterer vorteilhafter Ausgestaltung weist der genannte Oberflächenbereich dabei einen Legierungsbestandteil von etwa 50% Nickel oder mehr auf. Dabei kann insbesondere eine auch als Hastelloy bezeichnete Nickel-Basislegierung zum Einsatz kommen, die als Legierungsbestandteile etwa 50% Ni, 15% Cr, 15% Mo, sowie einen vergleichsweise geringen Fe-Anteil umfaßt. Eine derartige Legierung weist eine relative magnetische Permeabilität µᵣ von weniger als 1,08 auf und ist somit zum Einsatz im Brennstoffzellenmodul besonders geeignet. Alternativ könnte der Cr-Bestandteil auch durch eine andere geeignete Komponente ersetzt sein.

Den eigentlichen Brennstoffzellen sind innerhalb eines Brennstoffzellenmoduls üblicherweise auch als Betriebsteile bezeichnete Hilfskomponenten oder verfahrenstechnische Einrichtungen wie beispielsweise Ventile, Meßgeräte, Sensoren, Rohre, Schläuche oder Abscheider zugeordnet. Diese Hilfskomponenten sind im Gegensatz zu den oben angeführten Kernkomponenten beim Betrieb des Brennstoffzellenmoduls den Reaktanden oder dem elektrochemischen Prozeß nicht unmittelbar ausgesetzt. Um bei diesen Hilfskomponenten einerseits zuverlässig eine ausreichend niedrige magnetische Permeabilität µᵣ sicherzustellen und andererseits aber auch den Herstellungsaufwand besonders gering zu halten, sind diese Hilfskomponenten vorzugsweise aus Edelstahl, insbesondere einem nur sehr gering magnetisierbarem Edelstahl oder aus einer Legierung auf Nickel-Basis gefertigt. Bei einer Ausfertigung der genannten Hilfskomponenten auf Nickel-Basis weist ihr Werkstoff vorteilhafterweise einen Legierungsbestandteil von etwa 50% Ni auf. Somit kommt in besonders günstiger Ausgestaltung auch bei diesen Komponenten der genannte, auch als Hastelloy bezeichnete Werkstoff zum Einsatz.

Bei einer Anfertigung der genannten Hilfskomponenten aus Edelstahl kommt als Werkstoff vorteilhafterweise ein unter der Bezeichnung 1.3954, 1.3964 oder 1.3974 erhältlicher, stickstoffstabilisierter und sehr gering magnetisierbarer Edelstahl zum Einsatz. Als weitere solche Edelstähle kommen Edelstähle mit den Bezeichnungen 1.3802, 1.3805, 1.3813, 1.3815, 1.3817, 1.3819, 1.3941, 1.3949, 1.3952, 1.3953, 1.3958, 1.3960, 1.3962, 1.3965, 1.3967 und 1.3968 in Betracht.

Die mit der Erfindung erzielten Vorteile bestehen insbesondere darin, daß durch die Auswahl von Werkstoffen mit ausschließlich geringer relativer magnetischer Permeabilität µᵣ von weniger als etwa 1,1, sowohl für die Brennstoffzellen als solche, als auch für die eingesetzten Verbindungs- oder Hilfskomponenten, als auch für das Gehäuse des Brennstoffzellenmoduls, diese genannten Komponenten oder Bauteile nur vergleichsweise geringfügig magnetisierbar sind. Durch diese Komponenten oder ihren Werkstoff tritt somit eine nur geringfügige Verstärkung des lokal vorliegenden, durch äußere Einflüsse oder auch durch den Betriebsstrom generierten Magnetfelds auf. Das Brennstoffzellenmodul weist somit in seinem Außenbereich eine besonders geringe Signatur auf.

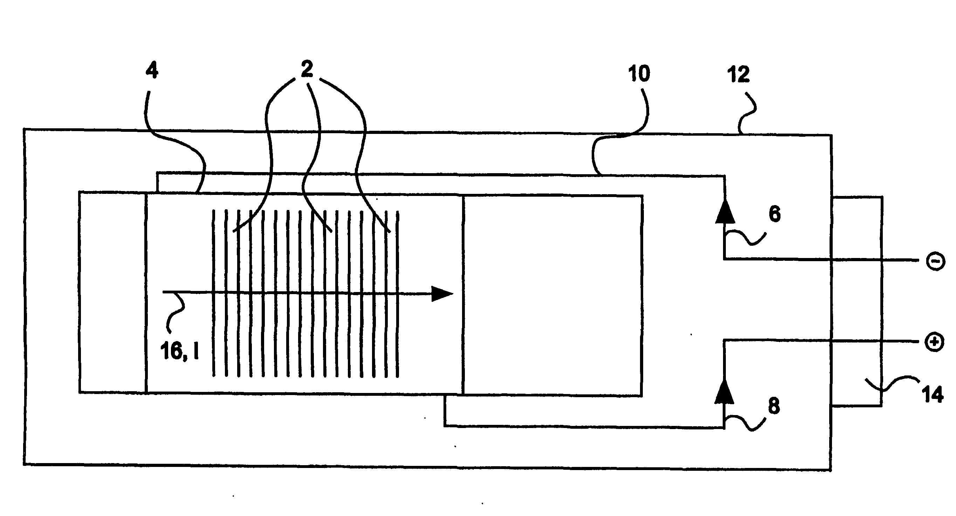

Ein Ausführungsbeispiel der Erfindung wird anhand einer Zeichnung näher erläutert. Darin zeigt die Figur schematisch ein Brennstoffzellenmodul.

Das Brennstoffzellenmodul 1 gemäß der Figur umfaßt eine Anzahl von in der Art eines Brennstoffzellenstapels zusammengefaßten und elektrisch in Reihe geschalteten Brennstoffzellen 2. Die Brennstoffzellen 2 bilden einen von einem inneren Gehäuse 4 umschlossenen Brennstoffzellenblock, der elektrisch eingangsseitig über eine Leitung 6 und ausgangsseitig über eine Leitung 8 mit einer nicht näher dargestellten elektrischen Last verbunden ist.

Den zum Brennstoffzellenstapel zusammengeschalteten Brennstoffzellen 2 ist eine Anzahl von nicht näher dargestellten Hilfskomponenten wie Ventile, Meßgeräte, Sensoren, Schläuche, Rohre oder Abscheider zugeordnet, die in einem gemeinsamen Gehäusesegment 10 außerhalb des inneren Gehäuses 4 angeordnet sind. Das innere Gehäuse 4 und das daran angelagerte Gehäusesegment 10 sind in einem sie gemeinsam in der Art eines Mantelgehäuses umschließenden äußeren Gehäuse 12 angeordnet, das als mechanischer und auch als Leckage-Schutz des Brennstoffzellenmoduls 1 dient. Die Leitungen 6, 8 sind dabei in einem Anschlußbereich durch ein an das äußere Gehäuse 12 angeflanschtes Anschlußstück 14 in den Außenbereich des Gehäuses 12, geführt.

Das Brennstoffzellenmodul 1 ist für die Erzeugung einer besonders niedrig gehaltenen, von außen detektierbaren Signatur bei seinem Betrieb ausgebildet. Dazu ist das Brennstoffzellenmodul 1 derart ausgestaltet, daß bei seinem Betrieb sowohl das durch den in der Figur durch den Pfeil 16 angedeuteten Betriebsstrom I aktiv erzeugte Magnetfeld als auch das durch die Reaktion der Werkstoffe auf dieses oder ein von außen aufgeprägtes Magnetfeld erzeugte zusätzliche Magnetfeld besonders gering gehalten sind. Dazu sind einerseits die Leitungen 6, 8 sowie weitere, im Ausführungsbeispiel nicht näher gezeigte Leitungsstücke und -komponenten derart angeordnet, daß sich die durch die darin fließenden Ströme im Außenbereich erzeugten Magnetfelder weitgehend kompensieren und somit nur ein besonders geringes Restmagnetfeld vorliegt. Um auch bezüglich der passiven Magnetfelder den Beitrag durch das Brennstoffzellenmodul 1 besonders gering zu halten, sind weiterhin sämtliche verwendeten Werkstoffe derart gewählt, daß sie eine relative magnetische Permeabilität µᵣ von weniger als 1,1 aufweisen.

Dazu sind sowohl die zur Bereitstellung der Brennstoffzellen 2 als solche verwendeten Materialien als auch die für die Herstellung von die Brennstoffzellen 2 verbindenden Verbindungskomponenten oder die im Gehäusesegment 10 angeordneten Hilfskomponenten als auch die für das innere Gehäuse 4, das Gehäusesegment 10 und das äußere Gehäuse 12 verwendeten Werkstoffe mit einer entsprechend geringen relativen magnetischen Permeabilität µᵣ gewählt.

Die Brennstoffzellen 2 weisen Verbundleiterplatten, die auch als Trägerkarten bezeichnet werden, auf, die als Kühlkarten ausgestaltet sind. Sie umschließen einen Kühlwasserraum und bilden mit Hilfe von Kanälen oder Prägestrukturen im Verbund miteinander oder im Verbund mit der Elektrolyt-Elektroden-Einheit Gasräume, durch die der Brennstoff (ein wasserstoffhaltiges Gas) und der Hilfsstoff (ein sauerstoffhaltiges Gas) strömen. Diese Platten sind hauptsächlich aus einem mit Graphit dotierten Kunststoffkörper gebildet. Dieser auch als kunststoffgebundenes Graphit bezeichnete Kunststoffkörper ist praktisch unmagnetisch und weist eine relative magnetische Permeabilität µᵣ von annähernd 1,0 auf. Alternativ ist auch die Verwendung einer Legierung auf Nickel-Basis oder eines Edelstahls als hauptsächlicher Werkstoff möglich. Um zusätzlich diese Komponenten, die im Betriebsfall den elektrochemischen Prozessen und somit einer besonders aggressiven Atmosphäre durch die Reaktanden ausgesetzt sind, auch für eine besonders lange Betriebsdauer auszugestalten, ist der Kunststoffkörper dabei jeweils mit einer Schutzschicht auf Titan-Basis versehen. Die Polplatten sind aus einer Legierung auf Nickel-Basis gefertigt. In diesem Fall kommt als Werkstoff eine auch als Hastelloy bezeichnete Legierung zum Einsatz, die als Legierungsbestandteil einen Anteil von 50% Ni, einen Anteil von 15% Cr, einen Anteil von 15% Mo sowie einen geringen Restanteil von Fe aufweist.

Die im Gehäusesegment 10 angeordneten Hilfskomponenten können ebenfalls aus einer derartigen Legierung auf Nickel-Basis gefertigt sein.

Im Ausführungsbeispiel sind die Hilfskomponenten jedoch aus Edelstahl angefertigt, wobei einerseits ebenfalls eine besonders geringe relative magnetische Permeabilität µᵣ vorliegt, und wobei andererseits eine ausreichende Korrosionsbeständigkeit gerade für einen Einsatz im Gehäusesegment 10 gegeben ist. Dazu sind die Hilfskomponenten aus unmagnetisierbarem Edelstahl gefertigt, der durch den Zusatz von Stickstoff besonders stabilisiert ist. Im Ausführungsbeispiel ist dabei als Werkstoff der unter der Werkstoffnummer 1.3964 erhältliche Edelstahl vorgesehen. Alternativ kann aber auch der unter der Werkstoffnummer 1.3954 oder der Werkstoffnummer 1.3974 erhältliche Edelstahl vorgesehen sein.

## Patentansprüche

1. Brennstoffzellenmodul (1) mit einem in einem Gehäuse (4) angeordneten und von zwei Polplatten begrenzten Brennstoffzellenstapel, der eine Anzahl von elektrisch in Reihe geschalteten Brennstoffzellen (2) umfaßt, wobei jede der Brennstoffzellen (2) eine von zwei Verbundleiterplatten benachbarte Elektrolyt-Elektroden-Einheit umfaßt, **dadurch gekennzeichnet, daß** das Gehäuse (4), die Polplatten und die Verbundleiterplatten aus Werkstoffen gefertigt sind, die eine relative magnetische Permeabilität (µᵣ) von weniger als 1,1 aufweisen.

2. Brennstoffzellenmodul (1) nach Anspruch 1, **dadurch gekennzeichnet, daß** das Gehäuse (4), die Polplatten und die Verbundleiterplatten aus nichtmetallischen Werkstoffen oder austenitischem Stahl gefertigt sind.

3. Brennstoffzellenmodul (1) nach Anspruch 1 oder 2, **dadurch gekennzeichnet, daß** sowohl die zur Bereitstellung der Brennstoffzellen (2) als auch die für die Herstellung von diese verbindenden Verbindungskomponenten oder ihnen zugeordneten Hilfskomponenten als auch die für das Gehäuse (4) verwendeten Werkstoffe eine relative magnetische Permeabilität (µᵣ) von weniger als 1,1 aufweisen.

4. Brennstoffzellenmodul (1) nach einem der Ansprüche 1 bis 3, bei dem jede Brennstoffzelle (2) eine Anzahl von Gasund/oder Kühlmittelräume einschließenden, mit einer Kontaktplatte versehenen Trägerkarten umfaßt, die jeweils aus einem mit Graphit dotierten, mit einer Schutzschicht auf Ti-Basis versehenen Kunststoffkörper gebildet sind.

5. Brennstoffzellenmodul (1) nach einem der Ansprüche 1 bis 4, bei dem diejenigen Komponenten, die im Betriebsfall einem Kontakt mit einem Reaktanden der oder jeder Brennstoffzelle (2) ausgesetzt sind, zumindest in einem Oberflächenbereich aus einer Legierung auf Nickel-Basis gefertigt sind.

6. Brennstoffzellenmodul (1) nach Anspruch 5, bei dem der Oberflächenbereich einen Legierungsbestandteil von etwa 50% Ni aufweist.

7. Brennstoffzellenmodul (1) nach einem der Ansprüche 1 bis 6, dessen Hilfskomponenten aus Edelstahl oder aus einer Legierung auf Nickel-Basis gefertigt sind.

8. Brennstoffzellenmodul (1) nach Anspruch 7, bei dem der Werkstoff der Hilfskomponenten einen Legierungsbestandteil von etwa 50% Ni aufweist.

9. Brennstoffzellenmodul (1) nach Anspruch 7, bei dem die Hilfskomponenten aus Edelstahl des Typs 1.3954, 1.3964 oder 1.3974 gefertigt sind.

## Claims

1. Fuel cell module (1) having a fuel cell stack, which is arranged in a housing (4), is delimited by two terminal plates and comprises a number of fuel cells (2) which are electrically connected in series, each of the fuel cells (2) comprising an electrolyte electrode assembly adjoined by two interconnector plates, **characterized in that** the housing (4), the terminal plates and the interconnector plates are made from materials which have a relative magnetic permeability (µᵣ) of less than 1.1.

2. Fuel cell module (1) according to Claim 1, **characterized in that** the housing (4), the terminal plates and the interconnector plates are made from nonmetallic materials or austenitic steel.

3. Fuel cell module (1) as claimed in Claim 1 or 2, **characterized in that** both the materials used to provide the fuel cells (2) and the materials used to produce connecting components which connect them, or associated auxiliary components, and the materials used for the housing (4) have a relative magnetic permeability (µᵣ) of less than 1.1.

4. Fuel cell module (1) as claimed in one of Claims 1 to 3, in which each fuel cell (2) comprises a number of carrier cards which enclose gas and/or coolant spaces, are provided with a contact plate and are each formed from a graphite-doped plastic body provided with a protective layer based on Ti.

5. Fuel cell module (1) as claimed in one of Claims 1 to 4, in which those components which, during operation, are exposed to contact with a reactant of the or each fuel cell (2) are produced, at least in a surface region, from an alloy based on nickel.

6. Fuel cell module (1) as claimed in Claim 5, in which the surface region has an alloying constituent of approximately 50% of Ni.

7. Fuel cell module (1) as claimed in one of Claims 1 to 6, the auxiliary components of which are made from stainless steel or an alloy based on nickel.

8. Fuel cell module (1) as claimed in Claim 7, in which the material of the auxiliary components has an alloying constituent of approximately 50% of Ni.

9. Fuel cell module (1) as claimed in Claim 7, in which the auxiliary components are made from stainless steel of type 1.3954, 1.3964 or 1.3974.

## Revendications

1. Module (1) de pile à combustible, comprenant un empilement de piles à combustible disposé dans une enveloppe (4) et délimité par deux plaques polaires, qui comprend un certain nombre de piles (2) à combustible montées électriquement en série, chacune des piles (2) à combustible comprenant une unité électrolyte-électrode voisine de deux plaques conductrices composites, **caractérisé en ce que** l'enveloppe (4), les plaques polaires et les plaques conductrices composites sont en des matériaux qui ont une perméabilité (µᵣ) magnétique relative inférieure à 1,1.

2. Module (1) de pile à combustible suivant la revendication 1, **caractérisé en ce que** l'enveloppe (4), les plaques polaires et les plaques conductrices composites sont en matériaux non métalliques ou en acier austénitique.

3. Module (1) de pile à combustible suivant la revendication 1 ou 2, **caractérisé en ce que** tant les matériaux utilisés pour la préparation des piles (2) à combustible qu'également les matériaux utilisés pour la production d'éléments de liaison les reliant ou d'éléments auxiliaires qui leur sont associés, que les matériaux utilisés pour l'enveloppe (4) ont une perméabilité (µᵣ) magnétique relative inférieure à 1,1.

4. Module (1) de pile à combustible suivant l'une des revendications 1 à 3, dans lequel chaque pile (2) à combustible comprend des cartes supports incluant un certain nombre de chambres de gaz et/ou de fluide de refroidissement munies d'une plaque de contact et constituées respectivement d'une pièce en matière plastique dopée par du graphite et munies d'une couche de protection à base de Ti.

5. Module (1) de pile à combustible suivant l'une des revendications 1 à 4, dans lequel les éléments, qui en cas de fonctionnement sont exposés à un contact avec un réactif de ou de chaque pile (2) à combustible, sont fabriqués, au moins dans une partie superficielle, en un alliage à base de nickel.

6. Module (1) de pile à combustible suivant la revendication 5, dans lequel la partie superficielle comporte un élément constitutif d'alliage d'au moins 50 % de Ni.

7. Module (1) de pile à combustible suivant l'une des revendications 1 à 6, dont les éléments auxiliaires sont en acier fin ou en un alliage à base de nickel.

8. Module (1) de pile à combustible suivant la revendication 7, dans lequel le matériau des éléments auxiliaires a un constituant d'alliage d'au moins 50 % de Ni.

9. Module (1) de pile à combustible suivant la revendication 7, dans lequel les constituants auxiliaires sont en acier fin du type 1.3954, 1.3964 ou 1.3974.
